# EUROPEAN PATENT APPLICATION

(11) **EP 2 671 635 A1**
(43) Date of publication of application: **11.12.2013**
(21) Application number: 12742759.9
(22) Date of filing: 17.01.2012
(51) Int. Cl.: B01J 19/00, C10G 2/00

(54) **TEMPERATURE CONTROL SYSTEM**

(30) Priority: 31.01.2011 JP 2011018263
(71) Applicant: Japan Oil, Gas and Metals National Corporation, Minato-ku, Tokyo 105-0001 (JP); INPEX Corporation, Tokyo 107-6332 (JP); JX Nippon Oil & Energy Corporation, Chiyoda-ku Tokyo 100-8162 (JP); Japan Petroleum Exploration Co., Ltd., Tokyo 100-0005 (JP); Cosmo Oil Co., Ltd., Minato-ku Tokyo 105-8528 (JP); Nippon Steel & Sumikin Engineering Co., Ltd., Tokyo 141-8604 (JP)
(72) Inventor: MORITA, Kentarou, Tokyo 141-8604 (JP); KATO, Yuzuru, Tokyo 141-8604 (JP)
(74) Representative: Vossius & Partner
(86) International application number: PCT/JP2012/050853
(87) International publication number: WO 2012/105311

(57) **Abstract**

The temperature control system of the present invention is a temperature control system for recovering reaction heat inside a reactor in which an exothermic reaction takes place, thereby controlling a temperature inside the reactor. The temperature control system is provided with a coolant drum in which a liquid coolant is accommodated in a vapor-liquid equilibrium state, a heat removing unit which is disposed on the reactor to internally circulate the liquid coolant supplied from the coolant drum, a temperature determining unit which determines a temperature inside the reactor, and a pressure controller which controls pressure inside the coolant drum. The pressure controller controls the pressure inside the coolant drum based on a difference between an actual temperature inside the reactor determined by the temperature determining unit and a preset temperature value inside the reactor, thereby controlling the temperature of the liquid coolant inside the coolant drum.

## Description

### BACKGROUND OF THE INVENTION

### Field of the Invention

The present invention relates to a temperature control system.
Priority is claimed on Japanese Patent Application No. 2011-18263, filed on January 31, 2011, the content of which is incorporated herein by reference.

### Description of Related Art

In recent years, as a process for synthesizing liquid fuels from natural gas, the GLT (Gas To Liquids: liquid fuels synthesis) technique has been developed. This GLT technique includes the steps of reforming a natural gas to produce a synthesis gas containing a carbon monoxide gas (CO) and a hydrogen gas (H₂) as main components, synthesizing liquid hydrocarbons using this synthesis gas as a feedstock via the Fischer-Tropsch synthesis reaction (hereinafter, also referred to as the FT synthesis reaction) and then hydrogenating and fractionating these liquid hydrocarbons to produce liquid fuel products such as naphtha (raw gasoline), kerosene, gas oil, wax and the like.
In the FT synthesis reaction, a reactor which carries out an exothermic reaction can convert the synthesis gas rich in hydrogen gas and carbon monoxide gas to hydrocarbons by using a catalyst. The FT synthesis reaction is an exothermic reaction and also quite narrow in its temperature range where the reaction proceeds appropriately, by which it is necessary to strictly control a reaction temperature inside the reactor, while recovering reaction heat which has been generated.

As a heat recovery system for recovering reaction heat inside a reactor, there is known, for example, a constitution described in Patent Document 1 given below. In this heat recovery system, a jacket-equipped conduit is disposed inside the reactor, and water which is supplied to an external boiler is circulated to a jacket space inside the jacket-equipped conduit, thereby recovering the reaction heat inside the reactor.

### PRIOR ART DOCUMENT

### Patent Document

Patent Document 1: Published Japanese Translation No. 2008-537507 of the PCT International Application

### SUMMARY OF THE INVENTION

### Technical Problem

However, in the conventional heat recovery system, since the water which has been supplied to the boiler is only circulated to the jacket space, there is a risk that temperature control is not appropriately performed in the reactor. In this instance, properties of hydrocarbons generated by the FT synthesis reaction are unstable and even disrupt operations of upgraded facilities at subsequent steps, which pose a problem.
Further, the temperature control is not appropriately performed in the reactor. As a result, where a temperature inside the reactor is shifted from a temperature range appropriate for the FT synthesis reaction to a high temperature side, the FT synthesis reaction goes out of control to result in abrupt temperature elevation. Thus, there are posed various problems such as deterioration and damage in catalysts, in addition with a problem on strength of the reactor.

The present invention has been developed in light of the above circumstances, and has an object of providing a temperature control system which is capable of quickly dealing with a change in temperature inside a reactor and controlling the temperature inside the reactor with high accuracy.

### SOLUTION TO PROBLEM

The temperature control system of the present invention is a temperature control system for recovering reaction heat inside a reactor in which an exothermic reaction takes place, thereby controlling a temperature inside the reactor. The temperature control system is provided with a coolant drum in which a liquid coolant is accommodated in a vapor-liquid equilibrium state, a heat removing unit which is disposed on the reactor to internally circulate the liquid coolant supplied from the coolant drum, a temperature determining unit which determines the temperature inside the reactor, and a pressure controller which controls the pressure inside the coolant drum. Further, the pressure controller controls the pressure inside the coolant drum based on a difference between an actual temperature inside the reactor determined by the temperature determining unit and a preset temperature value inside the reactor, thereby controlling the temperature of the liquid coolant inside the coolant drum.

In the present invention, since the liquid coolant is accommodated inside the coolant drum in a vapor-liquid equilibrium state, a correlation between pressure inside the coolant drum and a temperature of the liquid coolant is kept substantially equal. Through utilization of this fact, the pressure controller controls the pressure inside the coolant drum, thereby directly controlling the temperature of the liquid coolant supplied from the coolant drum to the heat removing unit, then controlling a recovery amount of reaction heat inside the reactor by the heat removing unit and the temperature inside the reactor.
That is, in the temperature control system, first, the pressure controller controls the pressure inside the coolant drum based on a difference between the actual temperature inside the reactor and a preset temperature value. Then, depending on a correlation with the vapor-liquid equilibrium state inside the coolant drum, the liquid coolant inside the coolant drum undergoes a change in temperature. Since the liquid coolant is supplied to the heat removing unit, an amount of heat recovered by the heat removing unit is changed, depending on the change in temperature of the liquid coolant. Then, the temperature inside the reactor can be controlled by adjusting the amount of heat to be recovered.

In the temperature control system of the present invention, the exothermic reaction may be the Fischer-Tropsch synthesis reaction.

In the temperature control system of the present invention, a coolant refilling unit which refills the liquid coolant into the coolant drum may be installed inside the coolant drum, and the coolant refilling unit may be disposed inside a gas phase unit of the coolant drum.

According to the present invention, the coolant refilling unit is disposed inside the gas phase unit of the coolant drum. Therefore, even if a liquid coolant lower in temperature than inside the coolant drum is refilled from the coolant refilling unit, heat will transfer between this liquid coolant and steam inside the coolant drum, by which the liquid coolant is equal in temperature to the steam and accumulated at a liquid phase unit inside the coolant drum. Thus, no difference is caused in temperature between the gas phase unit and the liquid phase unit inside the coolant drum.

In the temperature control system of the present invention, a spray unit which sprays the liquid coolant to the gas phase unit may be formed at the coolant refilling unit.

According to the present invention, the coolant refilling unit is provided with the spray unit which sprays the liquid coolant to the gas phase unit. Therefore, the liquid coolant refilled from the coolant refilling unit is increased in surface area, by which heat is allowed to move more smoothly between the steam and the liquid coolant inside the coolant drum.

In the temperature control system of the present invention, the coolant refilling unit may be formed in a tubular shape, and the spray unit may include a through hole which is formed at the coolant refilling unit.

### ADVANTAGEOUS EFFECTS OF INVENTION

According to the temperature control system of the present invention, the pressure controller controls the pressure inside the coolant drum based on a difference between the actual temperature inside the reactor and a preset temperature value. Thereby, the temperature of the liquid coolant supplied from the heat removing unit can be changed in order to adjust the amount of heat recovered at the heat removing unit. Therefore, where an actual temperature inside the reactor is higher than a preset temperature value, the pressure inside the coolant drum is controlled so as to increase the amount of heat recovered by the heat removing unit. Further, where the actual temperature is lower than a preset temperature value, the pressure inside the coolant drum is controlled so as to decrease the amount of heat recovered by the heat removing unit. It is, thus, possible to control the temperature inside the reactor within a preset temperature value intended.
Further, the pressure controller controls the pressure inside the coolant drum so as to be of equal correlation with the temperature of the liquid coolant supplied to the heat removing unit. Thereby, the temperature of the liquid coolant supplied from the coolant drum to the heat removing unit can be directly controlled. Therefore, the liquid coolant of which the temperature has been controlled outside the coolant drum is supplied to the coolant drum, thus making it possible to control the temperature inside the reactor more quickly than a method for controlling the temperature of the liquid coolant inside the coolant drum. It is, thereby, possible to reliably control the temperature so that an exothermic reaction will not go out of control resulting in abrupt temperature elevation inside the reactor.
As described above, in the method for supplying the liquid coolant controlled for the temperature outside to the coolant drum to control the temperature of the liquid coolant inside the coolant drum, the liquid coolant supplied from outside is less likely to become similar in temperature to the liquid coolant inside the coolant drum, thus resulting in a risk that the temperature of the reactor may not be controlled with high accuracy.

According to the temperature control system of the present invention, the exothermic reaction is the Fischer-Tropsch synthesis reaction which is quite narrow in temperature range where the reaction proceeds appropriately. Thus, it is possible to remarkably obtain the above-described effect.

According to the temperature control system of the present invention, the coolant refilling unit is disposed inside the gas phase unit of the coolant drum. Therefore, heat will move efficiently between the liquid coolant and the steam inside the coolant drum in the gas phase unit. Thereby, no difference was found in temperature between the gas phase unit and the liquid phase unit inside the coolant drum, even if the liquid coolant refilled from the coolant refilling unit is not preheated outside the system. Then, the pressure and the temperature inside the coolant drum can be kept so as to give a correlation in a vapor-liquid equilibrium state.

According to the temperature control system of the present invention, heat is allowed to transfer more smoothly between the steam and the liquid coolant inside the coolant drum. Thereby, the pressure and the temperature inside the coolant drum can be kept reliably so as to give a correlation in a vapor-liquid equilibrium state.

According to the temperature control system of the present invention, since the spray unit includes the through hole formed on the coolant refilling unit, it is possible to reliably spray the liquid coolant.

### BRIEF DESCRIPTION OF THE DRAWINGS

Fig. 1 is a schematic flowchart which shows a temperature control system of one embodiment of the present invention.
Fig. 2 is a lateral cross-sectional view of a coolant drum shown in Fig. 1.
Fig. 3 is a cross-sectional view in a width direction of the coolant drum given in Fig.1.
Fig. 4 is the other cross-sectional view in a longitudinal direction of a coolant drum of one reference example in the present invention.

### DETAILED DESCRIPTION OF THE INVENTION

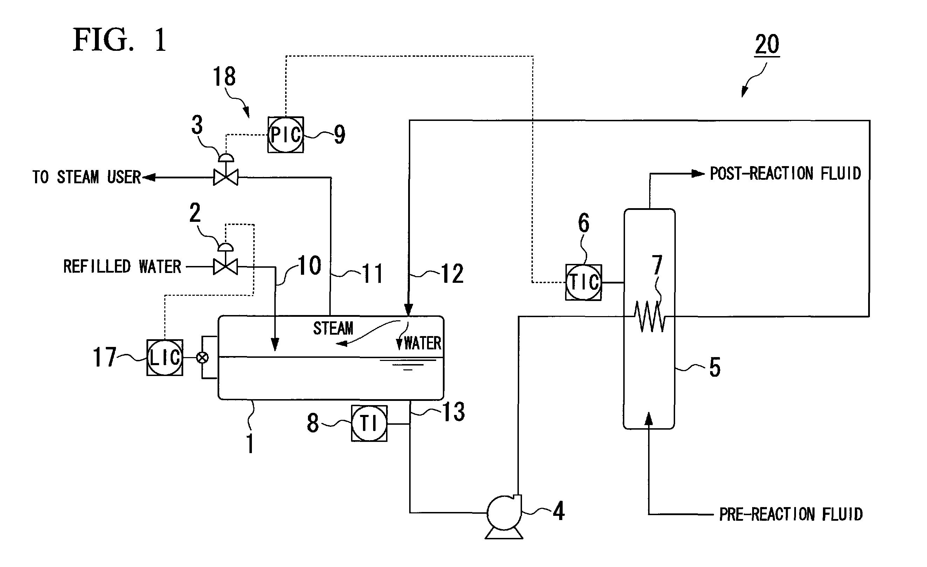

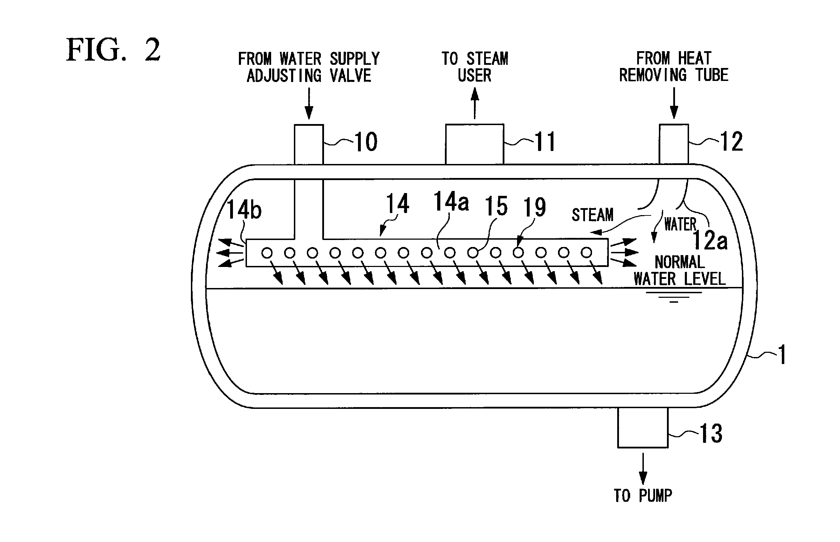

Hereinafter, an explanation will be made for an embodiment which is the best mode of the present invention by referring to the drawings 1 to 4. It is noted that in Fig. 2 and subsequent drawings, the constituents the same as those appearing in the flowchart of Fig. 1 will be given the same reference signs, with an explanation omitted here.

### (Temperature control system)

As shown in Fig. 1, a temperature control system 20 feeds water (a liquid coolant) stored in the coolant drum 1 in a vapor-liquid equilibrium state by a pump 4 from the bottom of the coolant drum 1 to a heat removing tube (heat removing unit) 7 inside a reactor 5 which carries out the Fischer-Tropsch synthesis reaction (an exothermic reaction) and allows the water to partially evaporate inside the heat removing tube 7 by reaction heat associated with the exothermic reaction which occurred in the reactor 5, thereby recovering the reaction heat.

Further, a mixed phase fluid made up of steam and water in which the water has partially evaporated in the heat removing tube 7 is returned to the coolant drum 1 through a return line 12 leading to the coolant drum 1, while the steam is supplied to a steam user outside the system through a steam outlet line 11. A steam trap (not shown) may be installed downstream from the steam outlet line 11.

Still further, refilled water (a liquid coolant) in an amount corresponding to the steam supplied outside the system is refilled through a refilled water line 10. A refilled amount of the refilled water is adjusted by a level adjusting valve 2 based on determination results by a level determination unit 17 which determines a water level (liquid level) inside the coolant drum 1.

In the above-described flowchart, based on determination results by a temperature determining unit 6 which determines a temperature inside the reactor 5 which carries out an exothermic reaction, a pressure controller 18 which controls the pressure inside the reactor 5 adjusts an amount of steam supplied from the steam outlet line 11 to outside by cascade control, thereby controlling the temperature of the reactor 5 which carries out the exothermic reaction. The temperature determining unit 6 may be provided with a plurality of temperature sensors (not shown) which are arranged apart from each other in a vertical direction, for example, on the reactor 5. It is, thereby, possible to determine a mean value of individual temperatures determined by these temperature sensors as the temperature inside the reactor 5.
Hereinafter, a detailed explanation will be made for the above-described control.

A steam phase (gas phase unit) and a water phase (liquid phase unit) inside the coolant drum 1 are kept in a vapor-liquid equilibrium state. Therefore, the pressure of the steam phase inside the coolant drum 1 and the temperature of the water phase inside the coolant drum 1 are kept so as to give a constant correlation.
Therefore, where a difference is found between the actual temperature inside the reactor 5 determined by the temperature determining unit 6 and a preset temperature value of the reactor 5 which carries out an exothermic reaction, the pressure controller 18 is actuated to change the pressure of the steam phase inside the coolant drum 1.

Here, in the present embodiment, the pressure controller 18 controls the steam outlet line 11, a pressure adjusting valve 3 installed on the steam outlet line 11, and a pressure setting unit 9 which sets the pressure inside the coolant drum 1 via the steam outlet line 11 by controlling the pressure adjusting valve 3. Determination results made by the temperature determining unit 6 are sent out to the pressure setting unit 9. Also, the pressure setting unit 9 calculates a difference between the actual temperature and a preset temperature value inside the reactor 5 from the determination results, thereby controlling the pressure adjusting valve 3 based on the difference and changing the pressure of the steam phase inside the coolant drum 1.

As described so far, the steam phase inside the coolant drum 1 is changed in pressure, by which the water phase inside the coolant drum 1 is changed in temperature (that is, the temperature of water supplied to the heat removing tube 7 inside the reactor 5 which carries out an exothermic reaction), thus making it possible to change the amount of heat recovered by the heat removing tube 7. Then, it is possible to bring the temperature of the reactor 5 which carries out the exothermic reaction closer to a preset temperature value.

In the present embodiment, the temperature of the water phase inside the coolant drum 1 can be determined by a thermometer 8 installed at an end of the coolant drum 1 side in a line 13 through which water is supplied from the coolant drum 1 to the heat removing tube 7 by using the pump 4. Further, in the present embodiment, the coolant drum 1, the line 13, the heat removing tube 7, and the return line 12 constitute the system through which water as a liquid coolant is circulated.

### (Coolant drum)

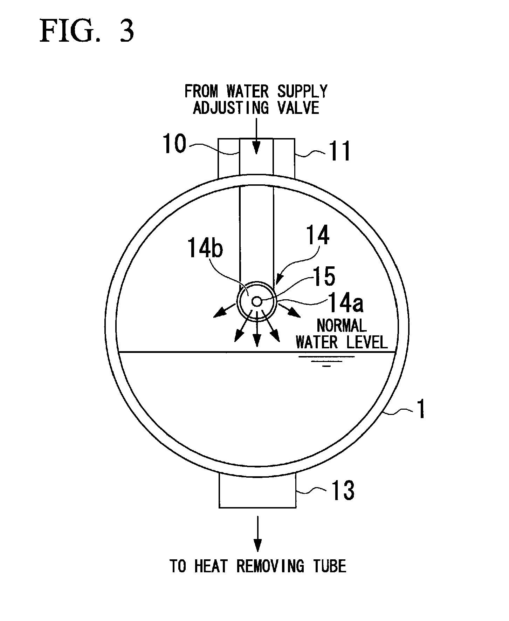

Next, an explanation will be given in detail for the coolant drum 1 of the temperature control system 20.
As shown in Fig. 2 and Fig. 3, inside the coolant drum 1, a refilled water line internal port (coolant refilling unit) 14 connected to the refilled water line 10 is extended along the longitudinal direction of the coolant drum 1. The refilled water line internal port 14 is arranged in the steam phase.
One or more holes (through holes) 15 are formed on a side wall 14a of the refilled water line internal port 14 along an axis direction thereof, and one or more holes 15 are also formed at an end 14b of the port. Then, these holes 15 constitute sprinkling units (spray units) 19 which sprinkle (spray) refilled water from the refilled water line internal port 14 into the steam phase. It is noted that the hole 15 may be a sprinkling nozzle.

Further, a return line internal port 12a connected to the return line 12 is also installed inside the steam phase of the coolant drum 1. A mixed phase fluid made up of steam and water, some of which has evaporated in the heat removing tube 7 is supplied into the coolant drum 1 from the return line internal port 12a. The return line internal port 12a is positioned further above from the refilled water line internal port 14 and arranged at a position away from above in the perpendicular direction of the refilled water line internal port 14. Then, the return line internal port 12a is bent to the refilled water line internal port 14, by which steam which has been circulated inside the return line internal port 12a is to be supplied toward the refilled water line internal port 14.

Next, an explanation will be made for actions of the above-constituted coolant drum 1.
Refilled water is supplied at a position which is not submerged from the refilled water line internal port 14, by which heat is exchanged between the refilled water lower in temperature and steam which is in a steam phase, thus avoiding a situation in which the refilled water flows, as it is still cool, to the bottom of the coolant drum 1. Further, the refilled water is sprinkled through the holes 15 on the side wall 14a and the end 14b of the refilled water line internal port 14. Thereby, the refilled water can be in contact with steam at a greater area to improve the efficiency of heat exchange, and heat can be exchanged more efficiently between the refilled water which is lower in temperature and the steam which is higher in temperature. Thus, no difference is found between the temperature of the steam phase and the water phase, and the pressure of the steam phase inside the coolant drum 1 and the temperature of the water phase inside the coolant drum 1 can be kept constant to give a correlation based on a vapor-liquid equilibrium state. Thus, the temperature can be controlled by the temperature control system 20 with high accuracy.

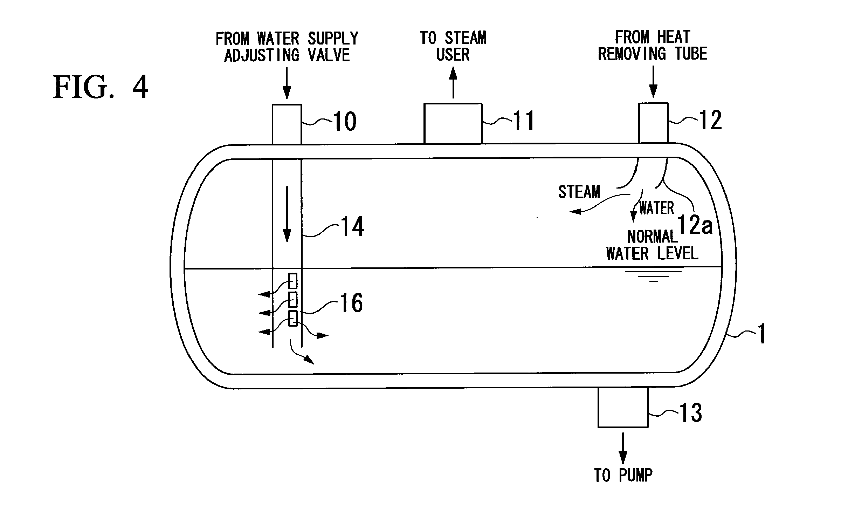

As shown in the reference example in Fig. 4, when the refilled water line internal port 14 is submerged into the coolant drum 1, the lower-temperature refilled water greater in specific gravity hardly flows out from side holes 16 which is formed in a wall of the refilled water line internal port 14 but flows directly to the bottom of the coolant drum 1. Therefore, a temperature difference takes place between the steam phase and the water phase inside the coolant drum 1. Then, the pressure of the steam phase inside the coolant drum 1 is not properly correlated with the temperature of the water phase inside the coolant drum 1, thus resulting in a risk that the temperature control system 20 may not control the temperature with high accuracy.

The present invention shall not be technically restricted to the above-described embodiment but may be modified in various ways within a scope not departing from the gist of the present invention.
For example, in the above embodiment, the Fischer-Tropsch synthesis reaction is carried out inside the reactor 5. However, as long as an exothermic reaction is carried out inside the reactor 5, the reaction may not be the Fischer-Tropsch synthesis reaction.

Further, in the above embodiment, as shown in Fig. 1, a post-reaction fluid (a reaction product) is introduced from the top of the reactor 5. However, a position in which the post-reaction fluid is introduced from the reactor 5 can be changed, whenever necessary. For example, the post-reaction fluid may be introduced from a body (side wall) or a bottom of the reactor 5. The post-reaction fluid may be introduced from a plurality of sites such as the top, the body and the bottom of the reactor 5. A position from which the post-reaction product is introduced may be changed depending on, for example, a type of exothermic reaction inside the reactor 5.

Further, in the above embodiment, water is used as a liquid coolant but any coolant other than water may be used.
In the above embodiment, a mixed-phase fluid made up of steam and water, some of which has evaporated at the heat removing tube 7 is to return to the coolant drum 1 through the return line 12. However, the mixed phase fluid may not return to the coolant drum 1.

In addition, a constituent of the above embodiment can be substituted with a known constituent within a scope not departing from the gist of the present invention, or the modified examples may be combined whenever necessary.

### INDUSTRIAL APPLICABILITY

The present invention may be applicable to any coolant drum in general which is attached to a system which allows water supplied to a heat removing tube to partially evaporate in a reactor for carrying out an exothermic reaction to recover reaction heat, thereby controls the reactor or a reaction temperature in itself.

### DESCRIPTION OF THE REFERENCE SIGNS

1: Coolant drum
2: Level adjusting valve
3: Pressure adjusting valve
4: Pump
5: Reactor
6: Temperature determining unit
7: Heat removing tube
8: Thermometer
9: Pressure setting unit
10: Refilled water line
11: Steam outlet line
12: Return line
12a: Return line internal port
13: line
14: Refilled water line internal port
14a: Side wall
14b: End of refilled water line internal port
15: Hole
16: Side hole
17: Level determination unit
18: Pressure controller
20: Temperature control system

## Claims

1. A temperature control system for recovering reaction heat inside a reactor in which an exothermic reaction takes place, thereby controlling a temperature inside the reactor, the temperature control system comprising:
a coolant drum in which a liquid coolant is accommodated in a vapor-liquid equilibrium state;
a heat removing unit which is disposed on the reactor to internally circulate the liquid coolant supplied from the coolant drum;
a temperature determining unit which determines a temperature inside the reactor; and
a pressure controller which controls pressure inside the coolant drum, wherein
the pressure controller controls the pressure inside the coolant drum based on a difference between an actual temperature inside the reactor determined by the temperature determining unit and a preset temperature value inside the reactor, thereby controlling the temperature of the liquid coolant inside the coolant drum.

2. The temperature control system according to Claim 1, wherein
the exothermic reaction is the Fischer-Tropsch synthesis reaction.

3. The temperature control system according to Claim 1 or Claim 2, wherein
a coolant refilling unit which refills the liquid coolant into the coolant drum is installed inside the coolant drum, and
the coolant refilling unit is disposed inside a gas phase unit of the coolant drum.

4. The temperature control system according to Claim 3, wherein
a spray unit which sprays the liquid coolant to the gas phase unit is formed at the coolant refilling unit.

5. The temperature control system according to Claim 4, wherein
the coolant refilling unit is formed in a tubular shape and
the spray unit includes a through hole which is formed at the coolant refilling unit.
